# EUROPEAN PATENT APPLICATION

(11) **EP 4 761 292 A1**
(43) Date of publication of application: **17.06.2026**
(21) Application number: 25222981.0
(22) Date of filing: 12.12.2025
(51) Int. Cl.: H04R 27/00, G06F 3/16

(54) **ACOUSTIC PARAMETER EDITING METHOD AND ACOUSTIC SYSTEM**

(30) Priority: 16.12.2024 JP 2024219701
(71) Applicant: YAMAHA CORPORATION, Hamamatsu-shi, Shizuoka 430-8650 (JP)
(72) Inventor: MIWA, Akihiro, Hamamatsu-shi, Shizuoka, 430-8650 (JP)
(74) Representative: Kehl, Ascherl, Liebhoff & Ettmayr Patentanwälte Partnerschaft mbB

(57) **Abstract**

An acoustic parameter editing method for an acoustic system is provided. The acoustic system includes a plurality of acoustic devices, and a management device for editing an acoustic parameter for the sound signal processing. The acoustic parameter editing method includes receiving, by the management device in an offline state where none of the plurality of acoustic device are connected to the management device, editing of the acoustic parameter; acquiring, by the management device or the acoustic device, association information providing a relationship between a first acoustic parameter stored in a memory of the respective acoustic device and a second acoustic parameter stored in a memory of the management device; and in a state where the target acoustic device is connected to the management device, changing, by the management device or the connected target acoustic device, the second acoustic parameter to the first acoustic parameter based on the association information.

## Description

Embodiments described herein relate generally to an acoustic parameter editing method and an acoustic system.

### BACKGROUND ART

Patent Literature 1 discloses an acoustic parameter editing method in which an acoustic parameter can be edited even in a location other than a venue where an acoustic device is provided.

### CITATION LIST

### PATENT LITERATURE

Patent Literature 1: JP2022-85045A

### SUMMARY OF INVENTION

**In** the acoustic parameter editing method in Patent Literature 1, information such as a model of a signal processing engine (acoustic device that is an editing target) is characterized in advance.

Therefore, an object of an embodiment of the present disclosure is to provide an acoustic parameter editing method in which an acoustic parameter can be edited offline without designating information on an acoustic device that is an editing target.

The acoustic parameter editing method is an acoustic parameter editing method for an acoustic system including a plurality of acoustic devices each including a sound signal processing component configured to perform a sound signal processing; and a management device including a processor configured to edit an acoustic parameter of the sound signal processing component included in a target acoustic device among the plurality of acoustic devices. The acoustic parameter editing method includes receiving, by the management device in an offline state where none of the plurality of acoustic device are connected to the management device, editing of the acoustic parameter of the sound signal processing component included in the target acoustic device; acquiring, by the management device or each of the plurality of acoustic devices in an online state where the plurality of acoustic devices are connected to the management device, association information providing a relationship between a first acoustic parameter stored in a memory of the respective acoustic device and a second acoustic parameter stored in a memory of the management device; and in a state where the target acoustic device is connected to the management device, changing, by the management device or the connected target acoustic device, the second acoustic parameter to the first acoustic parameter based on the association information.

According to one embodiment of the present disclosure, an acoustic parameter can be edited offline without designating information on an acoustic device that is an editing target.

### BRIEF DESCRIPTION OF DRAWINGS

FIG. 1 is a block diagram illustrating a configuration of an acoustic system 1;
FIG. 2 is a block diagram illustrating a configuration of a mixer 11;
FIG. 3 is a block diagram illustrating a configuration of a management device 12;
FIG. 4 is a diagram illustrating an example of a GUI;
FIG. 5 is a flowchart illustrating an operation of the management device 12;
FIG. 6 is a diagram illustrating an example of association information;
FIG. 7 is a flowchart illustrating an operation of the management device 12 according to Modification 1;
FIG. 8 is a flowchart illustrating an operation of the mixer 11 according to Modification 1;
FIG. 9 is a diagram illustrating association information according to Modification 2;
FIG. 10 is a diagram illustrating association information according to Modification 3;
FIG. 11 is a diagram illustrating, as another example of a manager tool, a GUI screen in which arrangement distribution of acoustic devices in response to a certain input condition is calculated;
FIG. 12 is a state transition diagram of the GUI;
FIG. 13 is a diagram illustrating an example of the GUI (system setting screen) that displays an acoustic device search method and a search result;
FIG. 14 is a diagram illustrating the GUI after a first network interface is received;
FIG. 15 is a diagram illustrating the GUI after selection of a first protocol (UID) is received;
FIG. 16 is a diagram illustrating the GUI after designation of an acoustic device to be connected is received; and
FIG. 17 is a diagram illustrating the GUI after selection of a second protocol (TCP) is received.

### DESCRIPTION OF EMBODIMENTS

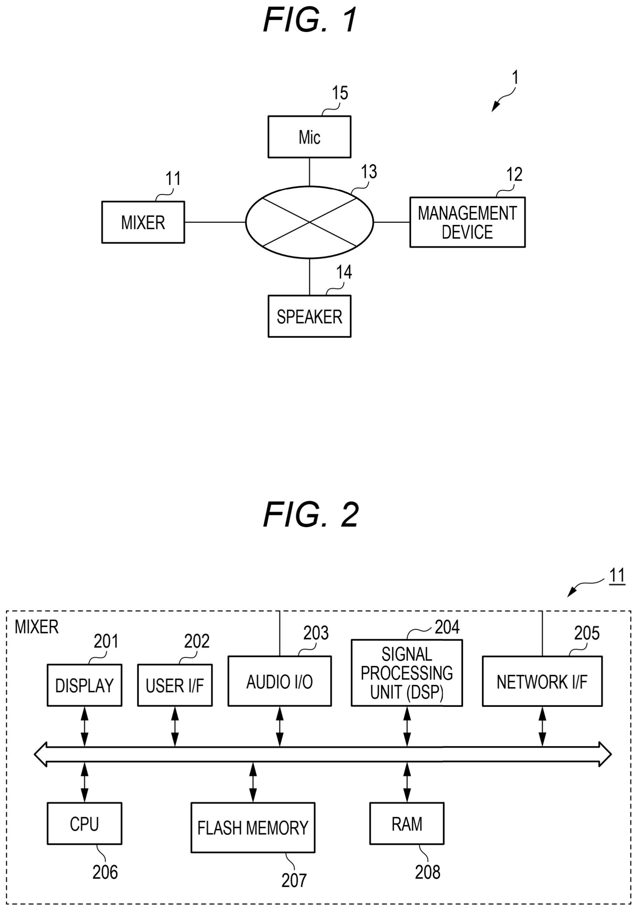

FIG. 1 is a block diagram illustrating a configuration of an acoustic system 1. The acoustic system 1 includes a mixer 11, a management device 12, a network 13, a speaker 14, and a microphone 15. The mixer 11, the speaker 14, and the microphone 15 are examples of a plurality of acoustic devices each of which has a sound signal processing engine or a sound signal processing component configured to perform sound signal processing in the present disclosure.

The mixer 11, the management device 12, the speaker 14, and the microphone 15 are connected via the network 13 such as a LAN. However, in the present disclosure, connection between the devices is not limited to this example. For example, the mixer 11, the management device 12, the speaker 14, and the microphone 15 may be connected by an audio cable, a USB cable, or wireless communication.

The mixer 11 receives a sound signal from the microphone 15. The mixer 11 outputs the sound signal to the speaker 14. In the present embodiment, the speaker 14 and the microphone 15 are illustrated as examples of the acoustic device connected to the mixer 11, but in reality, a large number of acoustic devices are connected to the mixer 11. The mixer 11 receives sound signals from a plurality of acoustic devices such as the microphone 15, performs sound signal processing such as mixing, and outputs the sound signals to a plurality of acoustic devices such as the speaker 14.

FIG. 2 is a block diagram illustrating a configuration of the mixer 11. The mixer 11 includes a display 201, a user I/F 202, an audio input/output (I/O) 203, a signal processing unit (DSP) 204, a network I/F 205, a CPU 206, a flash memory 207, and a RAM 208.

The CPU 206 is a control unit that controls an operation of the mixer 11. The CPU 206 performs various operations by reading, into the RAM 208, a predetermined program stored in the flash memory 207 that is a storage medium and executing the program.

The program read by the CPU 206 does not need to be stored in the flash memory 207 in the own device. For example, the program may be stored in a storage medium of an external device such as a server. In this case, the CPU 206 may read the program from the server into the RAM 208 each time and execute the program.

The signal processing unit 204 includes a DSP that performs various types of sound signal processing. The signal processing unit 204 performs sound signal processing such as mixing processing and filter processing on a sound signal input from an acoustic device such as the microphone 15 via the audio I/O 203 or the network I/F 205. The signal processing unit 204 outputs the audio signal after the signal processing to an acoustic device such as the speaker 14 via the audio I/O 203 or the network I/F 205.

A user sets an acoustic parameter (first acoustic parameter) for sound signal processing in the mixer 11 via the user I/F 202. The set first acoustic parameter is stored in the flash memory 207 or the RAM 208. The signal processing unit 204 and the CPU 206 perform the sound signal processing based on the first acoustic parameter stored in the flash memory 207 or the RAM 208.

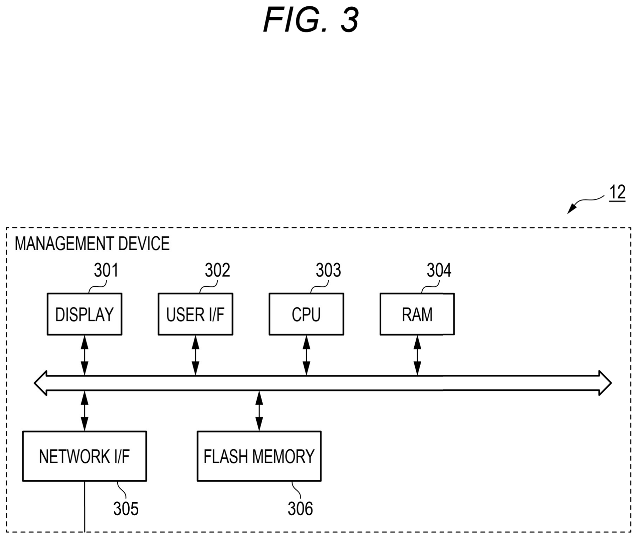

FIG. 3 is a block diagram illustrating a configuration of the management device 12. The management device 12 includes, for example, a personal computer or a dedicated embedded system.

The management device 12 includes a display 301, a user I/F 302, a CPU 303, a RAM 304, a network I/F 305, and a flash memory 306.

The CPU 303 reads, into the RAM 304, a program stored in the flash memory 306 that is a storage medium to implement a predetermined function. The program read by the CPU 303 does not need to be stored in the flash memory 306 in the own device. For example, the program may be stored in a storage medium of an external device such as a server. In this case, the CPU 303 may read the program from the server into the RAM 304 each time and execute the program.

The flash memory 306 stores, for example, a GUI program. The management device 12 executes the GUI program to provide a GUI to the user.

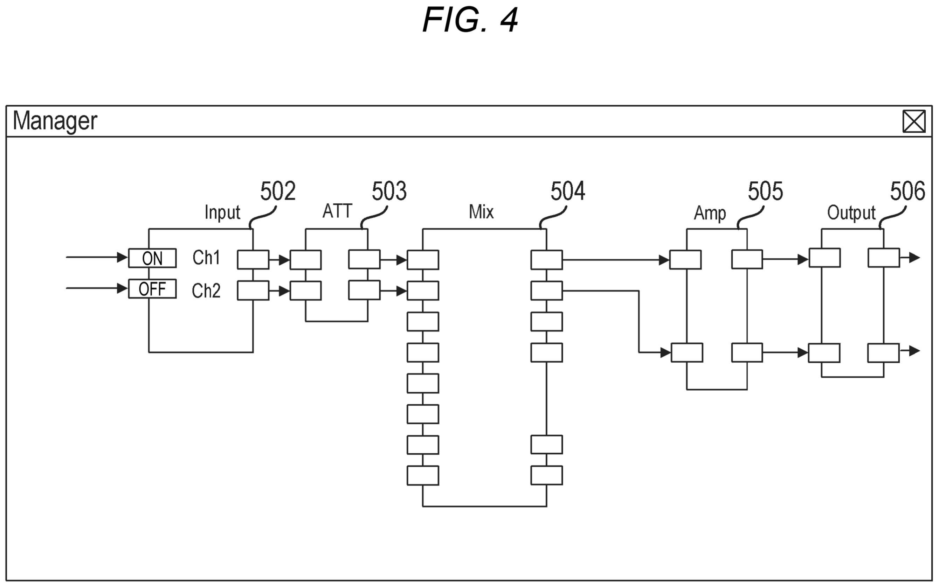

FIG. 4 is a diagram illustrating an example of the GUI. The GUI illustrated in FIG. 4 is a manager tool that receives setting of acoustic parameters of signal processing components. The signal processing components mean a functional configuration that inputs a sound signal, performs predetermined sound signal processing on the input sound signal, and outputs the sound signal. In the example in FIG. 4, the signal processing components include sound signal processing components such as an input component 502, an attenuator (ATT) 503, a mixing component (Mix) 504, an amplifier 505, and an output component 506. The user can edit, via such a GUI program, the acoustic parameter for the sound signal processing to be executed by the acoustic device such as the mixer 11. For example, in the example in FIG. 4, an acoustic parameter for turning on a first channel and an acoustic parameter for turning off a second channel are set in the input component 502.

The GUI program may be a native application program that runs on an operating system of the management device 12, or may be, for example, a web application program. When the GUI program is a web application program, the user is provided with the GUI from the GUI program via an application program of a web browser.

The acoustic parameter edited by the manager tool is stored in the flash memory 306 or the RAM 304 as a second acoustic parameter. A content of the flash memory 306 or the RAM 304 is synchronized with that of the flash memory 207 or the RAM 208 of the mixer 11 when connected to the mixer 11. For example, when the user changes the second acoustic parameter via the GUI program, the CPU 303 updates the content of the flash memory 306 or the RAM 304 and transmits the updated second acoustic parameter to the mixer 11. The mixer 11 synchronizes the first acoustic parameter with the second acoustic parameter. Accordingly, the user can edit the first acoustic parameter via the management device 12.

For example, when the user operates the user I/F 202 of the mixer 11 to change the first acoustic parameter, the mixer 11 updates the content of the flash memory 207 or the RAM 208 and transmits the updated first acoustic parameter to the management device 12. The CPU 303 receives the first acoustic parameter via the network I/F 305, and synchronizes the content of the flash memory 306 or the RAM 304 as the second acoustic parameter. Accordingly, the user can also directly edit the first acoustic parameter.

The management device 12 can edit the second acoustic parameter even in a state in which the management device 12 is not connected to the acoustic device such as the mixer 11.

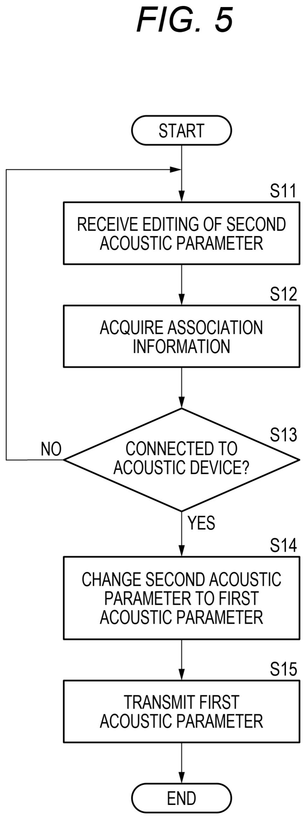

FIG. 5 is a flowchart illustrating an operation of the management device 12. The management device 12 receives editing of the second acoustic parameter in an offline state in which no acoustic device is connected (S11). For example, the management device 12 receives editing of the acoustic parameter of the signal processing component via the manager tool illustrated in FIG. 4.

A manager tool in the related art receives designation of a model (type and model name) of an acoustic device that is an editing target and is online, and then receives editing of an acoustic parameter of a signal processing component corresponding to the designated model. Therefore, the manager tool in the related art receives the editing of the acoustic parameter on the premise of an online state. Alternatively, in JP2022-85045A, editing is received offline in a state in which a model of an acoustic device that is an editing target is specified in advance, but the management device 12 according to the present embodiment receives editing of an acoustic parameter of a signal processing component even in an offline state and in a state in which a model of an acoustic device that is an editing target is not specified.

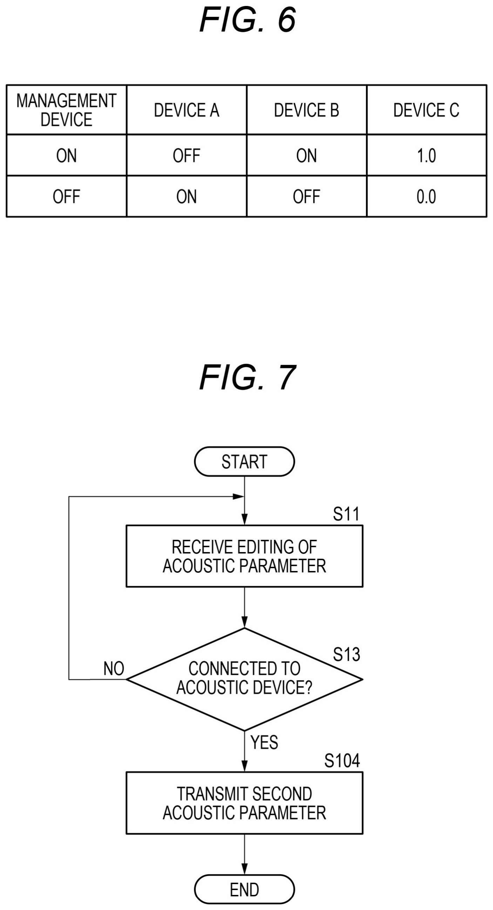

Next, the management device 12 acquires association information between the first acoustic parameter and the second acoustic parameter (S12). FIG. 6 is a diagram illustrating an example of the association information. The association information indicates a correspondence relation between the second acoustic parameter received by the manager tool of the management device 12 and the first acoustic parameter of the acoustic device. In the example in FIG. 6, the acoustic parameter includes information on input and output of a sound. The association information is configured to change the second acoustic parameter to the first acoustic parameter such that input and output of the sound in sound signal processing become the input and output of the sound designated by the second acoustic parameter.

For example, in the example of the manager tool in FIG. 4, the acoustic parameter for turning on the first channel and the acoustic parameter for turning off the second channel are set in the input component 502. An "on" acoustic parameter in the manager tool means that input and output of a sound signal are turned on, and an "off" acoustic parameter means that the input and output of the sound signal are turned off. On the other hand, for a certain acoustic device A, an "on" acoustic parameter means that a mute is turned on, and an "off" acoustic parameter means that the mute is turned off. That is, the on and off acoustic parameters edited by the manager tool of the management device 12 and the on and off acoustic parameters in the acoustic device A have opposite meanings. Therefore, in the association information illustrated in FIG. 6, the "off" acoustic parameter of the acoustic device A is associated with the "on" acoustic parameter of the management device 12, and the "on" acoustic parameter of the acoustic device A is associated with the "off" acoustic parameter of the management device 12. On and off acoustic parameters of a certain acoustic device B have the same meaning as the on and off acoustic parameters edited by the manager tool of the management device 12. Therefore, in the association information illustrated in FIG. 6, the "on" acoustic parameter of the acoustic device B is associated with the "on" acoustic parameter of the management device 12, and the "off" acoustic parameter of the acoustic device B is associated with the "off" acoustic parameter of the management device 12. An acoustic parameter of an acoustic device C is represented by a variable from 0 to 1. The acoustic device C is turned off with an acoustic parameter of "0.0" and turned on with an acoustic parameter other than "0.0". Therefore, in the association information illustrated in FIG. 6, for example, the acoustic parameter of "1.0" of the acoustic device C is associated with the "on" acoustic parameter of the management device 12, and the acoustic parameter of "0.0" of the acoustic device C is associated with the "off" acoustic parameter of the management device 12. The off acoustic parameter does not necessarily have to be associated with "0.0". For example, the off acoustic parameter may be associated with a volume value (for example, a value from 0.0 to 0.5) at which a sound is inaudible to human ears, and the on acoustic parameter may be associated with the other values.

The management device 12 confirms whether any one acoustic device of a plurality of acoustic devices is connected (S13). If the management device 12 determines that the acoustic device is connected (YES in S13), the management device 12 changes the second acoustic parameter to the first acoustic parameter based on the association information (S14). If the management device 12 determines that no acoustic device is connected (NO in S13), the processing returns to S11. After changing the second acoustic parameter to the first acoustic parameter, the management device 12 transmits the first acoustic parameter to the target acoustic device (S15). The acoustic device receives the first acoustic parameter and stores the received first acoustic parameter in a flash memory or a RAM.

Accordingly, as a new customer experience, the user can edit an acoustic parameter offline without designating information such as a model name related to an acoustic device that is an editing target.

### (Modification 1)

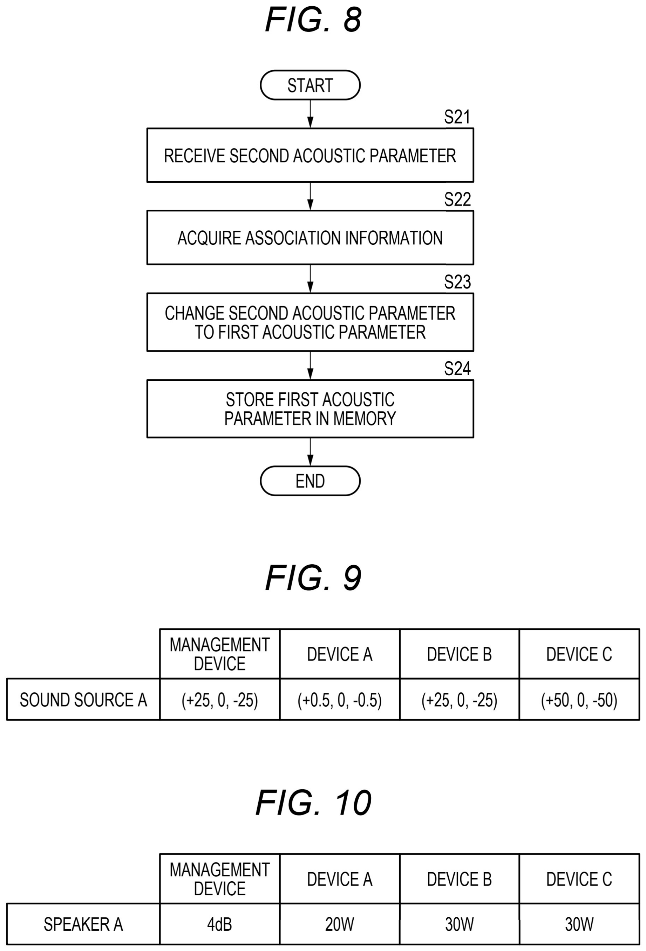

FIG. 7 is a flowchart illustrating an operation of the management device 12 according to Modification 1. FIG. 8 is a flowchart illustrating an operation of the mixer 11 according to Modification 1.

The management device 12 according to Modification 1 receives editing of the second acoustic parameter in the offline state in which no acoustic device is connected (S11), and then confirms whether any one acoustic device of the plurality of acoustic devices is connected (S13). If the management device 12 determines that the acoustic device is connected (YES in S13), the management device 12 transmits the second acoustic parameter to the target acoustic device (in this example, the mixer 11) (S104).

The mixer 11 receives the second acoustic parameter from the management device 12 (S21). The mixer 11 acquires the association information between the first acoustic parameter and the second acoustic parameter (S22). The mixer 11 changes the second acoustic parameter to the first acoustic parameter based on the acquired association information (S23). The mixer 11 stores the first acoustic parameter in the flash memory or the RAM (S24).

As described above, instead of the management device 12, the acoustic device may acquire the association information and convert the second acoustic parameter into the first acoustic parameter.

The management device 12 may convert the second acoustic parameter into the first acoustic parameter for each of some acoustic devices, and the another acoustic device may convert the second acoustic parameter into the first acoustic parameter themselves. Accordingly, it is possible to prevent a load of conversion processing from concentrating on the management device 12.

### (Modification 2)

FIG. 9 is a diagram illustrating association information according to Modification 2. The association information according to Modification 2 indicates a correspondence relation between the second acoustic parameter received by the manager tool of the management device 12 and the first acoustic parameter of each acoustic device. The acoustic parameter according to Modification 2 includes information on sound localization. The association information according to Modification 2 is configured to change the second acoustic parameter to the first acoustic parameter such that sound localization in the sound signal processing becomes sound localization designated by the second acoustic parameter.

For example, localization information in the management device 12 in the association information of FIG. 9 is represented by a three-dimensional physical position (a range of -50.0 m to +50.0 m) based on a certain position. The localization information of a sound source A in the management device 12 in FIG. 9 is represented by three-dimensional physical position coordinates (x, y, z) = (+25, 0, -25). Meanwhile, in the acoustic device A, localization information is represented by logical position coordinates linearly interpolated with respect to the physical position coordinates. For example, the localization information of the sound source A in FIG. 9 is represented by (x, y, z) = (+0.5, 0, -0.5) in the acoustic device A. Localization information in the acoustic device B is represented by physical coordinates that are the same as the localization information in the management device 12. Therefore, the localization information of the sound source A illustrated in FIG. 9 is represented by physical position coordinates (x, y, z) = (+25, 0, -25) in the acoustic device B. Localization information in the acoustic device C is represented by physical coordinates that are the same as the localization information in the management device 12, but a range is -100.0 m to + 100.0 m. Therefore, the localization information of the sound source A illustrated in FIG. 9 is represented by physical position coordinates (x, y, z) = (+50, 0, -50) in the acoustic device C.

The management device 12 or the acoustic device acquires such association information and obtains localization information based on the association information.

### (Modification 3)

FIG. 10 is a diagram illustrating association information according to Modification 3. Acoustic parameters according to Modification 3 include information on volumes. The association information according to Modification 2 is configured to change the second acoustic parameter to the first acoustic parameter such that a volume in the sound signal processing becomes a volume designated by the second acoustic parameter.

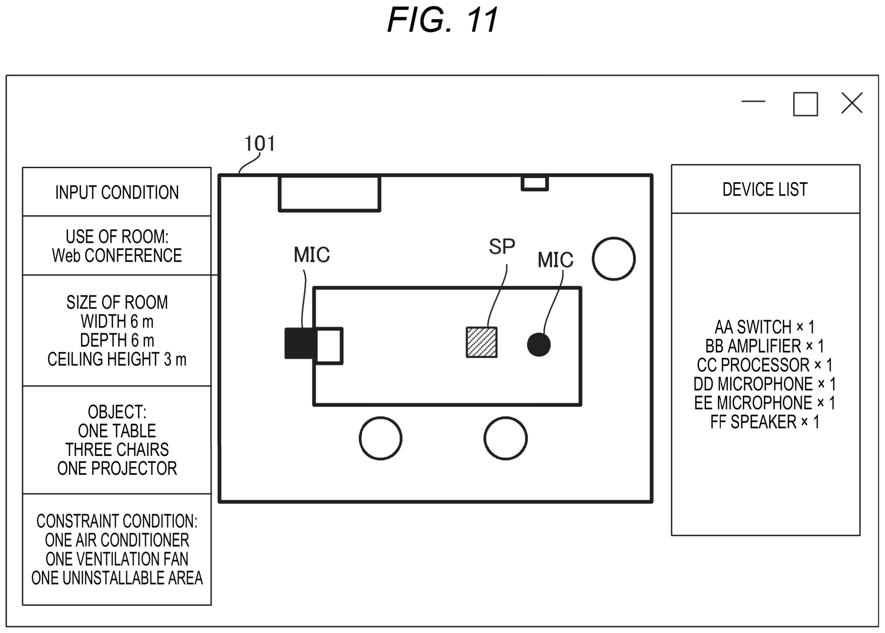

FIG. 11 is a diagram illustrating a GUI screen in which arrangement distribution of acoustic devices in response to a certain input condition is calculated as another example of the manager tool. In this manager tool, a received acoustic space and a target SN ratio distribution (dB value) in the acoustic space are input, and the arrangement distribution of the acoustic devices such as a microphone and a speaker corresponding to the SN ratio distribution is obtained by a predetermined trained model. A volume (W) of each microphone or speaker with respect to the target SN ratio distribution (dB value) varies depending on efficiency of the acoustic device. Therefore, as illustrated in FIG. 10, the association information according to Modification 3 indicates the volume (W) of each microphone or speaker that achieves the target dB value based on the efficiency of the acoustic device.

The management device 12 or the acoustic device acquires such association information, and obtains information on the volume of each acoustic device based on the association information.

### (Modification 4)

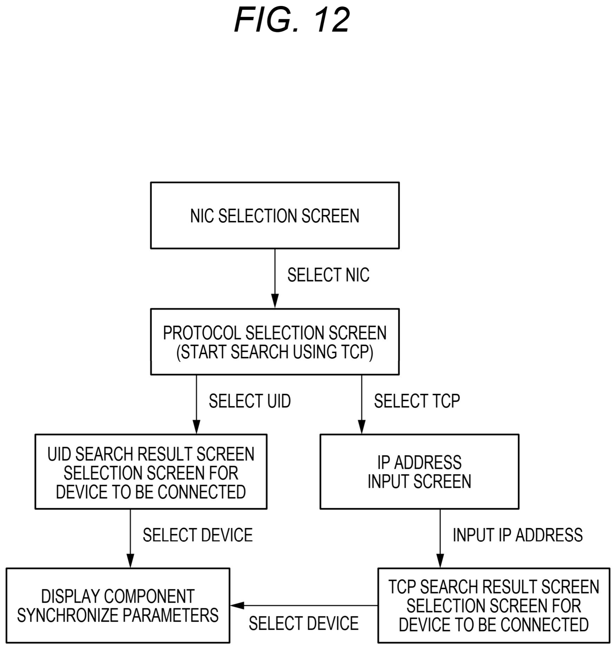

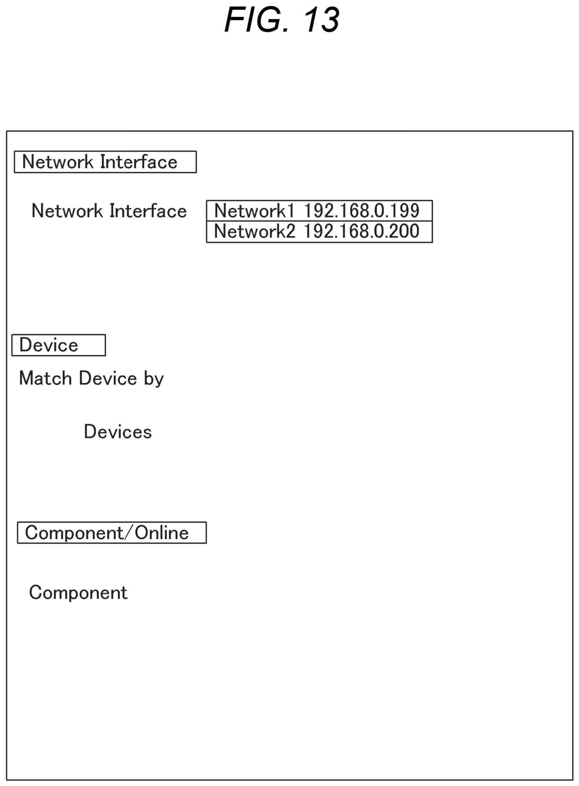

An acoustic system according to Modification 4 relates to a GUI for searching for and connecting to an acoustic device in the embodiment and Modifications 1 to 3 described above. FIG. 12 is a state transition diagram of the GUI. FIG. 13 is a diagram illustrating an example of the GUI (system setting screen) that displays an acoustic device search method and a search result. In the GUI according to Modification 4, it is possible to perform, in one screen without transition of the screen, a series of operations including selecting a device search from device searches according to different protocols, displaying a result, and transitioning to an online status.

The GUI includes a network adapter (NIC: network interface card) selection screen, a device search screen, and a component list display screen. Firstly, the user selects an NIC for connecting to the acoustic device. Each of NICs displayed is connected to a router and assigned a local IP address. In the example in FIG. 13, a NIC name "Network 1" and an assigned IP address "192.168.0.199" are displayed as a first network interface, and a NIC name "Network 2" and an assigned IP address "192.168.0.200" are displayed as a second network interface.

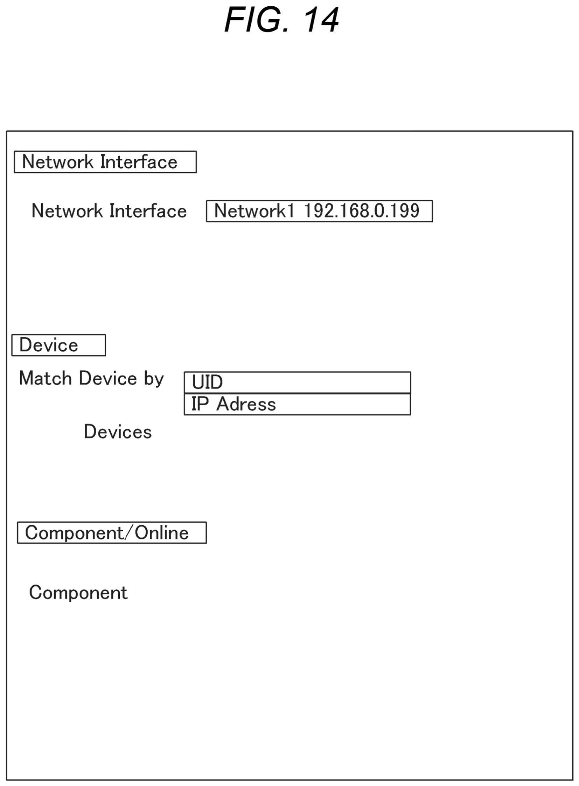

When the user selects the NIC, the GUI receives selection of a device search method on the device search screen. FIG. 14 is a diagram illustrating the GUI when the first network interface is received. Upon receiving the network interface, the management device 12 receives selection of a first protocol or a second protocol via the GUI. In this example, the first protocol is UnitID (UID), and the second protocol is transmission control protocol (TCP).

It is preferable that the management device 12 starts searching for an acoustic device using the first protocol and the second protocol before receiving the selection of the protocol at the time of receiving the selection of the first network interface or the second network interface. Accordingly, the search result can be displayed when the user selects the acoustic device search method, and a waiting time of the user can be shortened.

After the selection of the first protocol (UID) is received, the management device 12 displays a list of acoustic devices searched using the first protocol on the display 301 as a search result obtained by the UID, and displays a first operator for designating an acoustic device to be connected. The search using the UID is performed by multicast using the designated network interface UDP.

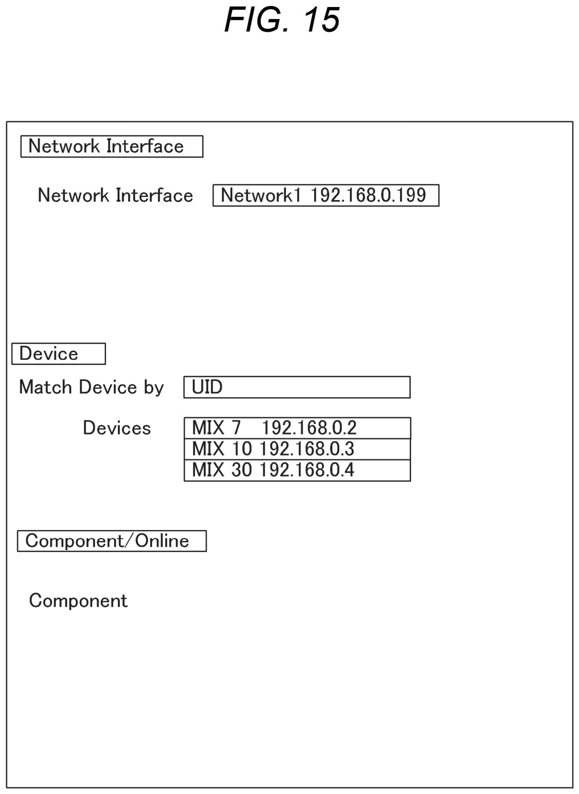

FIG. 15 is a diagram illustrating the GUI after the selection of the first protocol (UID) is received. As illustrated in FIG. 15, the management device 12 displays a list of three acoustic devices that are "MIX7", "MIX10", and "MIX30" as the acoustic device search result obtained by the UID. The management device 12 receives, through the first operator, designation of an acoustic device to be connected among the plurality of acoustic devices displayed in the list.

It is desirable to continue the search using the UID until re-selection of the network interface is received. Upon receiving the re-selection of the network interface, the management device 12 starts search using the UID in response to the re-selected network interface. It is preferable to continue the search using the UID even after the GUI (system setting screen) is closed.

By continuing the search using the UID, the management device 12 can additionally display a new acoustic device in the list when the new acoustic device is turned on and becomes connectable. The management device 12 may periodically perform the search using the UID to delete, from the list, an acoustic device that is no longer connected.

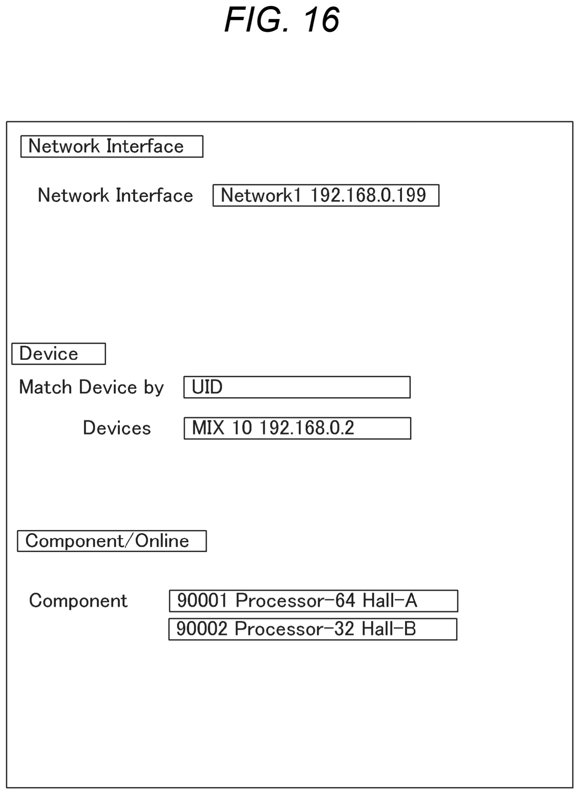

Upon receiving the designation of the acoustic device to be connected, the management device 12 communicates with the designated acoustic device using TCP and synchronizes with some of parameters of the acoustic device. That is, the management device 12 or the acoustic device changes the second acoustic parameter to the first acoustic parameter and synchronizes as described in the embodiment and Modifications 1 to 3. The management device 12 acquires, for example, information on a signal processing component included in the acoustic device. The management device 12 displays the acquired information of the signal processing component on the GUI. FIG. 16 is a diagram illustrating the GUI after the designation of the acoustic device to be connected is received. In the example in FIG. 16, IDs "9001" and "9002" and component names "Processor-64 Hall-A" and "Processor-32 Hall-B" of two signal processing components are displayed.

This synchronization may be performed at a timing of the device search using the UID. Accordingly, since the component information of the acoustic device found by the UID can be acquired in advance, the component information can be displayed at a time when the designation of the acoustic device is received, and a waiting time of the user can be shortened.

Finally, the management device 12 may receive selection of a synchronization direction. The synchronization direction is one of overwriting a content stored in a memory of the acoustic device on the management device 12 and overwriting a content stored in a memory of the management device 12 on the acoustic device. However, when the content is overwritten on the acoustic device, it is desirable to be limited to a case in which another management device is not connected to the acoustic device.

After receiving the selection of the synchronization direction, the management device 12 may display an "Online" button and receive an instruction to start the synchronization.

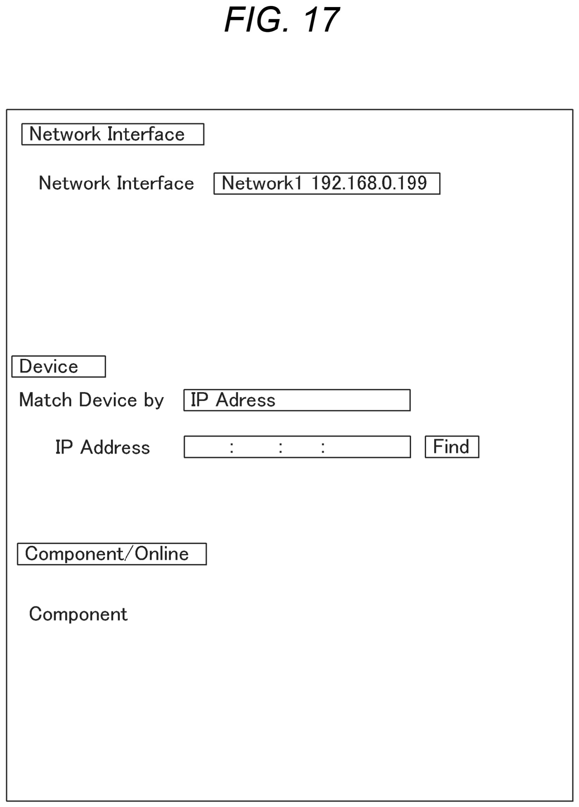

FIG. 17 is a diagram illustrating the GUI after selection of the second protocol (TCP) is received. When the selection of the second protocol is received, the management device 12 deletes the list of the acoustic devices and the first operator, and displays a second operator for designating the acoustic device to be connected using the second protocol. In the example in FIG. 17, the management device 12 displays, as the second operator, an operator (text input box) for designating an IP address. However, it is preferable that the management device 12 continues the search using the first protocol even when the selection of the second protocol is received. Accordingly, the search result can be displayed when the user changes the acoustic device search method to the first protocol, and a waiting time of the user can be shortened.

In the UDP search using the UID, the management device 12 cannot communicate with an acoustic device outside the subnet. Since the multicast is used in the UDP, packet loss may occur. Therefore, the user may want to perform the search using the IP address instead of the UID. Therefore, the GUI according to Modification 4 is configured to be able to perform, in one screen without transition of the screen, a series of operations including selecting a device search from device searches according to different protocols, displaying a result, and transitioning to an online status.

When the user selects the search using the IP address, sets an IP address, and presses a "Find" button, communication using the TCP is performed with an acoustic device having a designated IP address, and some of parameters of the acoustic device are synchronized. The management device 12 acquires, for example, the information on the signal processing component included in the acoustic device. The management device 12 displays the acquired information of the signal processing component on the GUI as illustrated in FIG. 16.

Even when the search using the IP address is selected, the search using the UID is preferably continued. Even when the search using the IP address is selected, it is desirable to continue the search until the re-selection of the network interface is received. Upon receiving the re-selection of the network interface, the management device 12 starts the search using the TCP in response to the re-selected network interface. It is preferable to continue the search using the TCP even after the GUI (system setting screen) is closed.

In the above example, two protocols of the first protocol (UID) and the second protocol (TCP) are illustrated, but the protocol is not limited to the example, and for example, the first protocol may search for other information such as a model name, a label, a version, an IP address, a MAC address, a subnet mask, and a Web UI using the UDP instead of the UID.

The description of the present embodiment is illustrative in all respects and not restrictive. The scope of the present disclosure is indicated by the claims rather than the embodiment described above. The scope of the present disclosure is intended to include all modifications within a meaning and a scope equivalent to the claims.

## Claims

1. An acoustic parameter editing method for an acoustic system including:
a plurality of acoustic devices each including a sound signal processing component configured to perform a sound signal processing; and
a management device including a processor configured to edit an acoustic parameter of the sound signal processing component included in a target acoustic device among the plurality of acoustic devices,
the acoustic parameter editing method comprising:
receiving, by the management device in an offline state where none of the plurality of acoustic device are connected to the management device, editing of the acoustic parameter of the sound signal processing component included in the target acoustic device;
acquiring, by the management device or each of the plurality of acoustic devices in an online state where the plurality of acoustic devices are connected to the management device, association information providing a relationship between a first acoustic parameter stored in a memory of the respective acoustic device and a second acoustic parameter stored in a memory of the management device; and
in a state where the target acoustic device is connected to the management device, changing, by the management device or the connected target acoustic device, the second acoustic parameter to the first acoustic parameter based on the association information.

2. The acoustic parameter editing method according to claim 1, wherein:
the acoustic parameter includes information on input and output of sound, and
the second acoustic parameter is changed to the first acoustic parameter such that input and output of sound in the sound signal processing becomes input and output of the sound designated by the second acoustic parameter.

3. The acoustic parameter editing method according to claim 1, wherein:
the acoustic parameter includes information on sound localization, and
the second acoustic parameter is changed to the first acoustic parameter such that sound localization in the sound signal processing becomes sound localization designated by the second acoustic parameter.

4. The acoustic parameter editing method according to claim 1, wherein:
the acoustic parameter includes information on a volume, and
the second acoustic parameter is changed to the first acoustic parameter such that a volume in the sound signal processing becomes a volume designated by the second acoustic parameter.

5. The acoustic parameter editing method according to any one of claims 1 to 4, wherein:
the management device includes a display configured to display a list of a search result of the plurality of acoustic devices, and
the method further comprises receiving, by the management device, designation of the target acoustic device to be connected among the plurality of acoustic devices displayed in the list on the display.

6. The acoustic parameter editing method according to claim 5, further comprising:
acquiring, by the management device, the search result by searching for the plurality of acoustic devices using a first protocol and a second protocol;
receiving, by the management device receives selection of the first protocol or the second protocol;
displaying, by the management device:
as the search result, the list of the plurality of acoustic devices searched for using the first protocol on the display; and
a first operator for designating the target acoustic device to be connected when the selection of the first protocol is received;
a second operator for designating the target acoustic device to be connected using the second protocol; and
deleting, by the management device, the list and the first operator when selection of the second protocol is received.

7. The acoustic parameter editing method according to claim 6, further comprising continuing the search using the first protocol when the selection of the second protocol is received.

8. The acoustic parameter editing method according to claim 6, wherein:
the second protocol is TCP, and
the second operator is an IP address designation operator.

9. The acoustic parameter editing method according to claim 6, wherein:
the management device includes a first network interface and a second network interface, and
the method further comprises:
receiving, by the management device, selection of the first network interface or the second network interface; and
starts searching, via the management device, for the plurality of acoustic devices using the first protocol and the second protocol when receiving selection of the first network interface or the second network interface.

10. An acoustic system comprising:
a plurality of acoustic devices each including a sound signal processing component configured to perform a sound signal processing; and
a management device including a processor configured to edit an acoustic parameter of the sound signal processing component included in a target acoustic device among the plurality of acoustic devices,
wherein the processor of the management device is configured to receive editing of the acoustic parameter of the sound processing component included in the target acoustic device in an offline state where none of the plurality of acoustic devices are connected to the management device,
wherein the processor of the management device or each of the plurality of acoustic devices, in an online state where the plurality of acoustic devices are connected to the management device, is configured to acquire association information providing a relationship between a first acoustic parameter stored in a memory of the respective acoustic device and a second acoustic parameter stored in a memory of the management device, and
wherein in a state where the target acoustic device is connected to the management device, the processor of the management device or the connected acoustic device is configured to change the second acoustic parameter to the first acoustic parameter based on the association information.
